# EUROPEAN PATENT APPLICATION

(11) **EP 1 688 739 A1**
(43) Date of publication of application: **09.08.2006**
(21) Application number: 06250579.7
(22) Date of filing: 02.02.2006
(51) Int. Cl.: G01N 30/46, B01L 3/00, G01N 30/72

(54) **Devices, systems and methods for separation**

(30) Priority: 03.02.2005 US 51587
(71) Applicant: Agilent Technologies, Inc., Palo Alto, CA 94306 (US)
(72) Inventor: Yin, Hongfeng, Loveland CO 80537-0599 (US); Killeen, Kevin P., Loveland, CO 80537-0599 (US)
(74) Representative: Ellis, Katherine Elizabeth Sleigh

(57) **Abstract**

Disclosed is a multi-substrate microfluidic device for performing multidimensional separation of sample components, as well as systems and methods for using the same.

## Description

This invention relates to devices, systems and methods for separation, in particular for multi-dimensional separation.

Multi-dimensional liquid chromatography (LC) offers the ultimate separation power that many complex proteomic samples demand. Proteins or peptides obtained from enzymatic digests of these samples are typically separated in a first dimension using Strong Cation Exchange (SCX) chromatography and eluted into a second dimension capillary column such as a reverse phase high pressure liquid chromatography column (RP-HPLC). A first dimension SCX Column can be coupled with a second dimension column through a low dead volume rotary valve in order to achieve on-line two-dimensional (2-D) LC separation. Such a system may require three packed columns and up to twelve standard liquid chromatography fittings. At sub µL/minute flow rates, fluidic leaks and blockages often arise.

Microfluidic devices may be adapted to employ or carry out a number of different separation techniques. Capillary electrophoresis (CE), for example, separates molecules based on differences in the electrophoretic mobility of the molecules. Typically, microfluidic devices employ a controlled application of an electric field to induce fluid flow and/or to provide flow switching. In order to effect reproducible and/or high-resolution separation, a fluid sample "plug," which is a predetermined volume of fluid sample, must be controllably injected into a capillary separation column or conduit. For fluid samples containing high molecular weight, charged, biomolecular analytes such as proteins, microfluidic devices containing a capillary electrophoresis separation conduit a few centimeters in length may be effectively used in carrying out sample separation of small volumes of fluid sample having a length on the order of micrometers. Once injected, high sensitivity detection such as laser-induced fluorescence (LIF) may be employed to resolve a separated fluorescently labeled sample component.

Ordinarily, capillary electrophoresis is not compatible with chromatographic techniques. However, capillary electrochromatography, a fusion of liquid chromatography and capillary electrophoresis involving the application of an electric field in order to generate electroosmotic flow, has been proposed. For example, U.S. Patent Nos. 5,770,029 and 6,007,690 each to Nelson *et al*., each describe microfluidic devices employing electroosmotic flow to drive a mobile phase through a high surface area column to achieve sample enrichment. When an electric field is applied, the electroosmotic flow moves the mobile phase through the packed column. However, the charged stationary phase surfaces, e.g., chromatographic bead surfaces, are responsible for generating electrokinetic flow and/or switching as well as separation. Accordingly, capillary electrochromatography suffers from a number of drawbacks. For example, individual control over flow switching and separation is difficult to achieve in capillary electrochromatography. In addition, it is difficult to produce appropriate surfaces for both flow switching and separation for any particular sample. Furthermore, capillary electrochromatography cannot carry out gradient chromatography with reliability, since, as the content of the mobile phase changes during separation, surface charge on the stationary phase associated with electroosmotic flow also changes.

Because microfluidic devices have a relatively simple construction, they are in theory inexpensive to manufacture. Nevertheless, the production of such devices presents various challenges. For example, the flow characteristics of fluids in the small flow channels of a microfluidic device may differ from the flow characteristics of fluids in larger devices, as surface effects come to predominate and regions of bulk flow become proportionately smaller. While pressure-driven flow associated with conventional liquid chromatography is useful in providing flow through packed columns, such pressure-driven flow has not been successfully employed in microfluidic devices for separation. Thus, a mechanism for producing a motive force that moves analytes and fluids may have to be incorporated into such microanalytical devices. This may involve providing motive force by using electrodes, which may add to the cost of the microfluidic device.

A number of patents disclose various valve technologies employed in microfluidic devices. U.S. Patent No. 4,869,282 to Sittler *et al*., for example, discloses a micromachined valve that employs a control force in order to deflect a polyimide film diaphragm. Similarly, U.S. Patent Nos. 5,771,902 and 5,819,794 to Lee *et al*. describe a microvalve that employs a controllable cantilever to direct blood flow. U.S. Patent No. 5,417,235 to Wise *et al* describes an integrated microvalve structure with monolithic microflow controller that controls actuation electrostatically, and U.S. Patent No. 5,368,704 to Madou *et al*. describes a micromachined valve that can be opened and closed electrochemically. Other aspects of valve operation and control are described in U.S. Patent Nos. 5,333,831, 5,417,235, 5,725,017, 5,964,239, 5,927,325 and 6,102,068. Many of these valves are complex in construction and are incapable of the fast response times required in certain biomolecule analysis applications due to an excess of "dead space," i.e., unused and unnecessary space within the microfluidic device.

According to a first aspect of the present invention there is provided a device as specified in claim 1.

According to a second aspect of the present invention there is provided a system as specified in claim 27.

According to a third aspect of the present invention there is provided a method as specified in claim 28.

The invention provides multi-layered microfluidic chips and systems comprising a plurality of microfluidic chips and interfacing devices for performing multi-dimensional separations. Interfacing devices are also provided, including devices for aligning fluid communication ports on a plurality of different chips. In one aspect, the aligned ports are pressure-sealed against each other. In another aspect, a substantially leak-free interface interfacing a plurality of microfluidic chips is provided.

In one aspect, the system performs one or more of the following functions in addition to separation, including but not limited to: sample collection, sample preparation, sample introduction, detection, and compound identification.

In one embodiment, the invention relates to a device comprising: a first substrate comprising a first separation fluid-transporting feature for separating molecules in a sample according to a first characteristic and a second substrate comprising a second fluid-transporting feature for separating molecules in a sample according to a second characteristic. The first and second substrate lie in different planes and the first and second separation fluid-transporting features are connectable to each other (directly or indirectly). In one aspect, the first and second characteristics are different from each other. Fluid flow through at least one fluid-transporting feature of the device can be controlled by establishing a pressure differential at different regions of the fluid-transporting feature.

In one embodiment, the first and second separation fluid-transporting features are connectable to each other via a switching structure in slidable and fluid-tight contact with the first and/or second substrate which allows for controllable formation of a plurality of different flow paths upon alignment of one or more substrate fluid-transporting features with a fluid transporting feature of the switching structure.

In another embodiment, the first and/or second substrate comprises an integrated gradient-generation means for generating a gradient of a selected mobile-phase component in a mobile phase and is adapted to allow the mobile phase from the gradient-generation means to be transported into a separation conduit.

In a further embodiment, a separation fluid-transporting feature of the device comprises a separation medium. In certain aspects, the separation medium comprises a polymeric material. In one aspect, the polymeric material is formed *in situ* in the device.

The separation characteristic can include a property, including, but not limited to: isoelectric point, charge, polarity, mass, molecular weight, affinity for a binding molecule, hydrophobicity, chirality, and sequence characteristics of a biopolymer.

In certain aspects, the device comprises a fluid-transporting feature comprising an affinity matrix. The affinity matrix can comprise binding partners for proteins to be depleted from a sample prior to introducing the sample into a separation fluid-transporting feature.

In one embodiment, the device further comprises a fluid-transporting feature for processing a sample before or after separation. For example, in certain aspects, the fluid-transporting feature for processing comprises a cleavage agent, such as an agent for cleaving peptide bonds.

In another embodiment, the device comprises a holding reservoir for holding a sample prior to or after separation by a separation fluid-transporting feature. In one aspect, the holding reservoir comprises a waste reservoir. In another aspect, the waste reservoir receives undesired components that have passed through a separation conduit.

Fluid may be moved from a first substrate to a second substrate by a variety of mechanisms. In one aspect, fluid is moved from a first substrate to a second substrate by providing a pressure differential at a connecting fluid-transporting feature that connects an inlet port on a second substrate to an outlet port on a first substrate.

In certain aspects, sample is introduced into one or more fluid transporting features of the device via one or more sample inlet ports. In one aspect, sample inlet ports can be interfaced with a microtiter plate. For example, the center-to-center distance of sample inlet ports can be the same as the center-to-center distance of one or more rows and/or columns of wells of a microtiter plate.

In one embodiment, the invention relates to a system comprising any of the devices described above and a detector in communication with one or more fluid-transporting features for detecting sample components. The device can also include sensors for monitoring fluid flow through one or more fluid-transporting features of the device. In one aspect, the system further comprises an analysis module for analyzing separated sample components. The analysis module can comprise, for example, a mass spectrometer. In certain aspects, the system further comprises an interfacing module for providing separated sample components to the analysis module. For example, the interfacing module can comprise an electrospray.

In another embodiment, the invention relates to a method, which comprises introducing a sample into a sample inlet port of the device, separating sample components according to the first characteristic in the first separation fluid-transporting feature of the first substrate; and providing sample components that have been separated according to the first characteristic to the second separation fluid-transporting feature of the second substrate for separation according to the second characteristic. In one aspect, the method further comprises providing sample components that have been separated according to the second characteristic to an analysis module to obtain data about the sample components. For example, in one aspect, the data includes data about the mass of a sample component.

Preferred embodiments are described below, by way of example only, with reference to the accompanying drawings. The Figures shown herein are not necessarily drawn to scale, with some components and features being exaggerated for clarity.

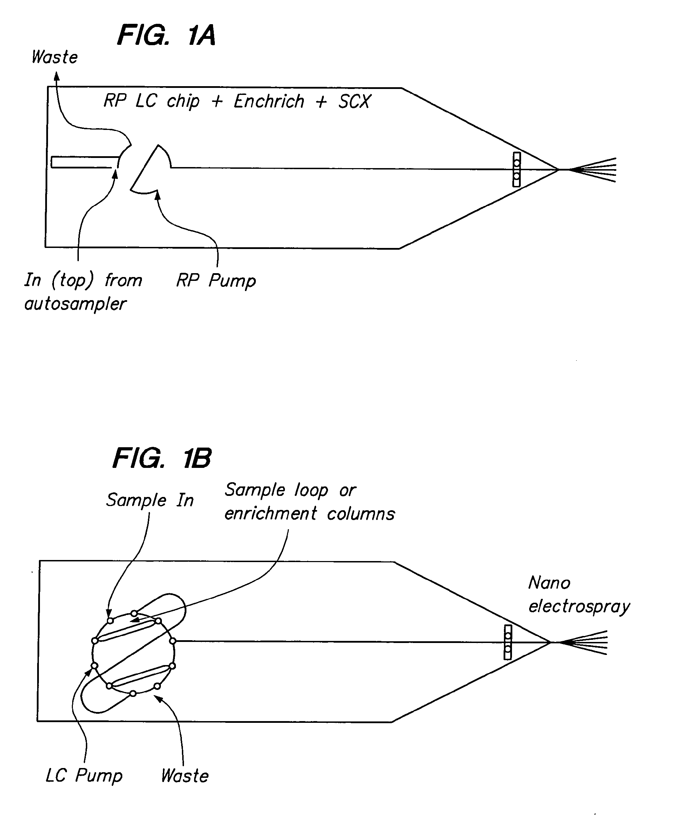

Figure 1A is a schematic diagram showing a top-down view of an integrated microfluidic device for performing multi-dimensional separation of a sample, comprising first and second dimension separation channels provided on first and second substrates according to one embodiment of the invention. The device comprises a switching structure which employs the rotational sliding motion of a switching plate in order to effect fluid communication between fluid-transporting features on the first and second substrate. As shown in the Figure, the device may be interfaced with an analysis system such as a mass spectrometer, e.g., through a nanoelectrospray.

Figure 1B shows a microfluidic device for performing multi-dimensional separation of a sample, comprising first and second dimension separation channels provided on first and second substrates according to another embodiment of the invention, in which a plurality of switching structures are provided for interfacing one or more first substrate separation conduits with one or more second substrate separation conduits.

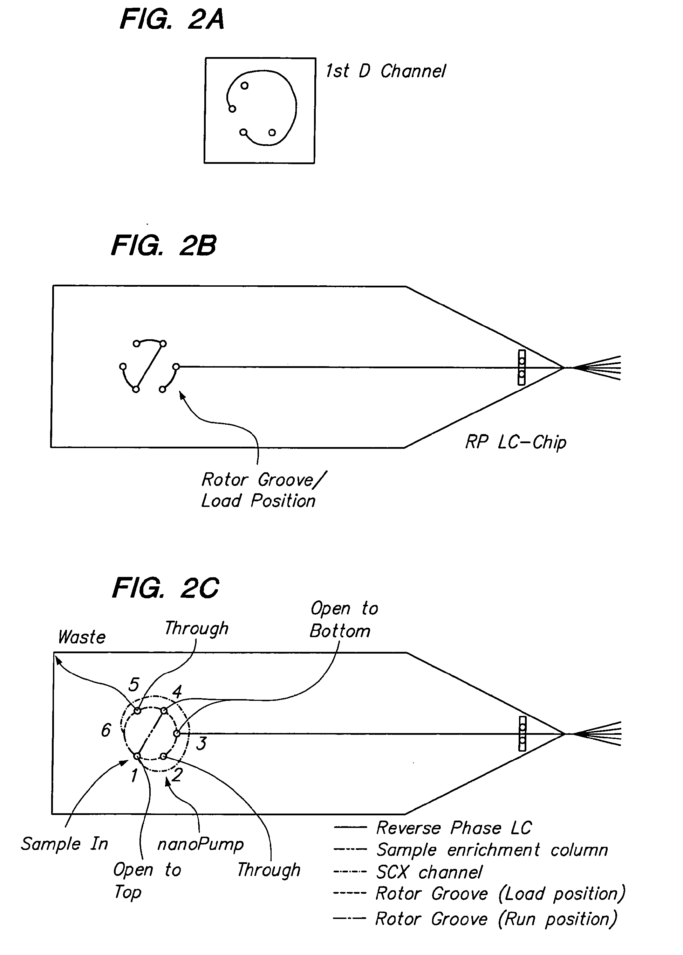

Figures 2A-C show components of a multi-substrate microfluidic device according to one aspect of the invention. Figure 2A shows a substrate comprising a channel for a first dimension separation and comprising fluid communication ports shown as circles in the Figure. Figure 2B shows a separate substrate comprising a channel for performing a second dimension separation and comprising fluid communication ports. Figure 2C shows a system in which the device shown in Figure 2A is sealed against the device shown in Figure 2B, after aligning fluid communication ports. The system is shown interfaced to a nanoelectrospray device for providing separated sample components to a mass spectrometer.

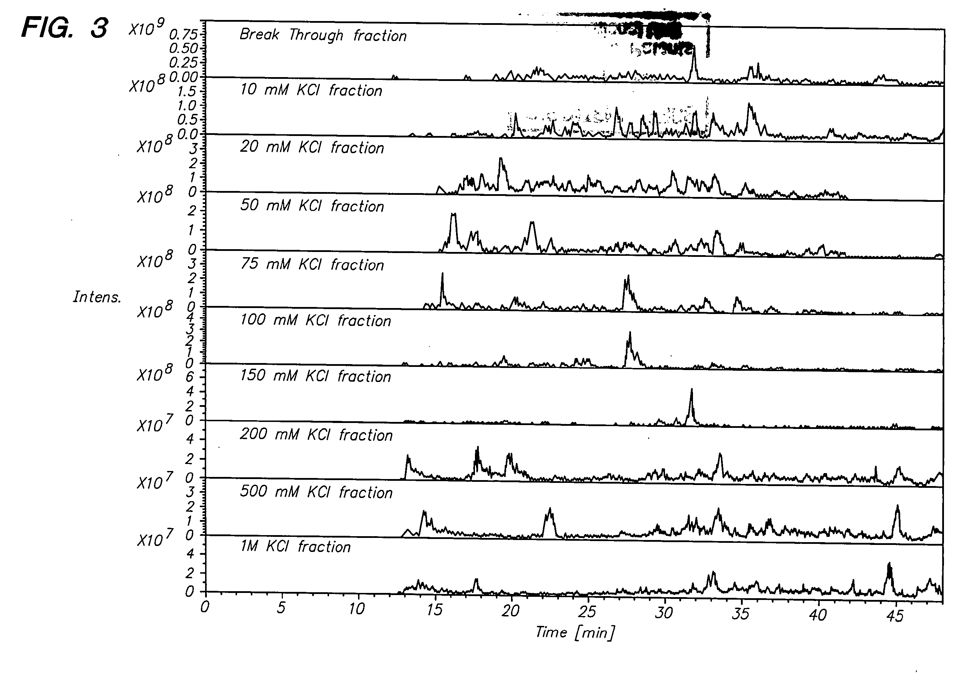

Figure 3 shows base peak chromatograms of 10 SCX fractions obtained using a device according to Figure 2C.

Before describing the present invention in detail, it is to be understood that this invention is not limited to specific compositions, method steps, or equipment, as such may vary. It is also to be understood that the terminology used herein is for the purpose of describing particular embodiments only, and is not intended to be limiting. Methods recited herein may be carried out in any order of the recited events that is logically possible, as well as the recited order of events. Furthermore, where a range of values is provided, it is understood that every intervening value, between the upper and lower limit of that range and any other stated or intervening value in that stated range is encompassed within the invention. Also, it is contemplated that any optional feature of the inventive variations described may be set forth and claimed independently, or in combination with any one or more of the features described herein. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

Unless defined otherwise below, all technical and scientific terms used herein have the same meaning as commonly understood by one of ordinary skill in the art to which this invention belongs. Still, certain elements are defmed herein for the sake of clarity.

All publications mentioned herein are incorporated herein by reference to disclose and describe the methods and/or materials in connection with which the publications are cited.

The publications discussed herein are provided solely for their disclosure prior to the filing date of the present application. Nothing herein is to be construed as an admission that the present invention is not entitled to antedate such publication by virtue of prior invention. Further, the dates of publication provided may be different from the actual publication dates, which may need to be independently confirmed.

It must be noted that, as used in the specification and the appended claims, the singular forms "a," "an" and "the" include plural referents unless the context clearly dictates otherwise. Thus, for example, reference to "a microchannel" includes a plurality of microchannels, reference to "a fluid" includes a mixture of fluids, and reference to "a component property" includes a plurality of component properties and the like.

The following definitions are provided for specific terms that are used in the following written description.

A "biopolymer" is a polymer of one or more types of repeating units. Biopolymers are typically found in biological systems and particularly include polysaccharides (such as carbohydrates), peptides (which term is used to include polypeptides and proteins, such as antibodies or antigen-binding proteins), glycans, proteoglycans, lipids, sphingolipids, and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in hydrogen bonding interactions, such as Watson-Crick type, Wobble type and the like. In some cases the backbone of the biopolymer may be branched. Biopolymers may be heterogeneous in backbone composition thereby containing any possible combination of polymer units linked together such as peptide- nucleic acids (which have amino acids linked to nucleic acids and have enhanced stability). As used herein with respect to linked units of a biopolymer, "linked" or "linkage" means two entities are bound to one another by any physicochemical means. Such linkages are well known to those of ordinary skill in the art and include, but are not limited to, amide, ester and thioester linkages. Linkages include synthetic or modified linkages.

A "set" or "sub-set" of any item (such as a set of proteins or peptides) may contain only one of the item, or only two, or three, or any multiple number of the items.

As used herein, a "peptide mixture" is typically a complex mixture of peptides obtained as a result of the cleavage of a sample comprising proteins.

As used herein, a "sample of proteins" is typically any complex mixture of proteins and/or their modified and/or processed forms, which may be obtained from sources, including, without limitation: a cell sample (e.g., lysate, suspension, collection of adherent cells on a culture plate, a scraping, a fragment or slice of tissue, a tumor, biopsy sample, an archival cell or tissue sample, laser-capture dissected cells, etc), an organism (e.g., a microorganism such as a bacteria or yeast), a subcellular fraction (e.g., comprising organelles such as nuclei or mitochondria, large protein complexes such as ribosomes or golgi, and the like), an egg, sperm, embryo, a biological fluid fluid, viruses, and the like.

The term "peptide" as used herein refers to an entity comprising at least one peptide bond, and can comprise either D and/or L amino acids. Ideally, the ligand is a peptide consisting essentially of about 2 to about 20 amino acids (e.g., about 2, 3, 4, 5, 6, 7, 8, 9, or 10 amino acids).

"Protein", as used herein, means any protein, including, but not limited to peptides, enzymes, glycoproteins, hormones, receptors, antigens, antibodies, growth factors, etc., without limitation. Proteins include those comprised of greater than about 20 amino acids, greater than about 35 amino acid residues, or greater than about 50 amino acid residues. The terms "polypeptide" and "protein" are generally used interchangeably herein. Further, unless context indicates otherwise, a method and/or device and/or system being described for manipulation (e.g., separation, transfer, analysis, detection) of proteins samples may also be used for peptide manipulation.

As used herein, a "a biological fluid" includes, but is not limited to, blood, plasma, serum, sputum, urine, tears, saliva, sputum, cerebrospinal fluid, lavages, leukapheresis samples, milk, ductal fluid, perspiration, lymph, semen, umbilical cord fluid, and amniotic fluid, as well as fluid obtained by culturing cells, such as fermentation broth and cell culture medium.

As used herein, "a sample of complex proteins" may contain greater than about 100, about 500, about 1,000, about 5,000, about 10,000, about 20,000, about 30,000, about 100,000 or more different proteins. Such samples may be derived from a natural biological source (e.g., cells, tissue, bodily fluid, soil or water sample, and the like) or may be artificially generated (e.g., by combining one or more samples of natural and/or synthetic or recombinant sources of proteins).

The term "proteome" refer to the protein constituents expressed by a genome, typically represented at a given point in time. A "sub-proteome" is a portion or subset of the proteome, for example, the proteins involved in a selected metabolic pathway, or a set of proteins having a common enzymatic activity.

The term "microfluidic device" or "device" or "microfabricated device" refers to a device having features of micron or submicron dimensions, and which can be used in any number of chemical processes involving very small amounts of fluid. Such processes include, but are not limited to, electrophoresis (e.g., capillary electrophoresis or CE), chromatography (e.g., µLC), screening and diagnostics (using, e.g., hybridization or other binding means), and chemical and biochemical synthesis (e.g., DNA amplification as may be conducted using the polymerase chain reaction, or "PCR") and analysis (e.g., through enzymatic digestion). The features of the microfluidic devices are adapted to the particular use. For example, microfluidic devices that are used in separation processes, e.g., CE, contain channels (termed "conduits" herein when enclosed, i.e., when the cover plate is in place on the channel-containing substrate surface) on the order of 1 µm to 200 µm in diameter, typically 10 µm to 75 µm in diameter, and approximately 0.1 to 50 cm in length. Microfluidic devices that are used in chemical and biochemical synthesis, e.g., DNA amplification, will generally contain reaction zones (termed "reaction chambers" herein when enclosed, i.e., again, when the cover plate is in place on the channel-containing substrate surface) having a volume of about 1 nl to about 100 µl, typically about 10 nl to 20 µl.

The term "channel" or "microchannel" or "nanochannel" as used herein refers to a passage through a substrate and is used interchangeably with the terms "groove," "trough," or trench." The geometry of a channel may vary widely and includes tubular passages with circular, rectangular, square, D-shaped, trapezoidal or other polygonal cross- sections. A channel may comprise varying channel geometries (e.g., rectangular at one section and trapezoidal at another section). However, in one aspect, the cross-sectional area of a channel used for separation is substantially constant in order to further reduce dead volume. A channel may be defined by a substrate which forms the base and side walls of the channel. In certain aspects, however, a substrate contributes to the side walls of a channel while an underlying surface forms the base of the channel. As used herein, the base of a channel refers to a portion of the channel which is substantially parallel and proximal to a surface on which the device rests.

Channels may form curved or angular paths through the substrate, and they may cross or intersect with other channels, and in various embodiments they can be substantially parallel to one another.

In certain embodiments channels are filled with a separation media, reagents (e.g., such as enzymes, polymerases, antibodies, nucleic acids, polypeptides, peptides, and the like), and/or buffers.

The term "embossing" is used to refer to a process for forming polymer, metal or ceramic shapes by bringing an embossing die into contact with a pre-existing blank of polymer, metal or ceramic. A controlled force is applied to the embossing die and such that the pattern and shape determined by the embossing die is pressed into the pre-existing blank of polymer, metal or ceramic. The term "embossing" encompasses "hot embossing," which is used to refer to a process for forming polymer, metal or ceramic shapes by bringing an embossing die into contact with a heated pre-existing blank of polymer, metal or ceramic. The pre-existing blank of material is heated such that it conforms to the embossing die as a controlled force is applied to the embossing die. The resulting polymer, metal or ceramic shape is cooled and then removed from the embossing die.

The term "injection molding" is used to refer to a process for molding plastic or nonplastic ceramic shapes by injecting a measured quantity of a molten plastic or ceramic substrate into a die (or mold). In one embodiment of the present invention, miniaturized devices can be produced using injection molding.

The term "LIGA process" is used to refer to a process for fabricating microstructures having high aspect ratios and increased structural precision using synchrotron radiation lithography, galvanoforming, and plastic molding. In a LIGA process, radiation sensitive plastics are lithographically irradiated with high energy radiation using a synchrotron source to create desired microstructures (such as channels, ports, apertures, and microalignment means), thereby forming a primary template.

The term "microalignment means" or "alignment means" is defined herein to refer to any means for ensuring the precise microalignment of microfabricated features in a device. Microalignment means can be formed either by laser ablation or by other methods of fabricating shaped pieces well known in the art. Representative microalignment means that can be employed herein include a plurality of appropriately arranged protrusions in component parts, e.g., projections, depressions, grooves, ridges, guides, or the like.

The term "in order" is used herein to refer to a sequence of events. When a fluid travels "in order" through an inlet port and a conduit, the fluid travels through the inlet port before traveling through the conduit. "In order" does not necessarily mean consecutively. For example, a fluid traveling in order through an inlet port and outlet port does not preclude the fluid from traveling through a conduit after traveling through the inlet port and before traveling through the outlet port.

The term "constructed" as used herein refers to forming, assembling, modifying or combining components in order to build at least a portion of the inventive device. Thus, "a conduit constructed for separating" as used herein refers to assembling or combining parts to form a conduit or modifying a surface of a conduit, wherein the conduit serves to differentiate or discriminate sample fluid components. For example, a conduit constructed for separating the components of a fluid sample may have a chemically, mechanically or energetically modified interior surface that interacts with different components differently, or may contain separating media such as chromatographic packing material.

The term "controllably introduce" as used herein refers to the delivery of a predetermined volume of a fluid sample in a precise and accurate manner. A fluid sample may be "controllably introduced" through controllable alignment of two components of a device, i.e., fluid-transporting features.

The term "controllable alignment" as used herein refers to the spatial relationship between at least two components of a device, e.g., fluid-transporting features, wherein the spatial relationship may be adjusted according to a desired function of the device.

The term "flow path" as used herein refers to the route or course along which a fluid travels or moves. Flow paths are formed from one or more fluid-transporting features of a device.

The term "fluid-transporting feature" as used herein refers to an arrangement of solid bodies or portions thereof that direct fluid flow. Fluid-transporting features include, but are not limited to, chambers, reservoirs, conduits and channels. The term "conduit" as used herein refers to a three-dimensional enclosure formed by one or more walls and having an inlet opening and an outlet opening through which fluid may be transported. The term "channel" is used herein to refer to an open groove or a trench in a surface. A channel in combination with a solid piece over the channel forms a conduit. However, unless context indicates otherwise, the terms "fluid-transporting feature", "channel", "reservoir" and "conduit" are used interchangeably.

The term "fluid-tight" is used herein to describe the spatial relationship between two solid surfaces in physical contact such that fluid is prevented from flowing into the interface between the surfaces.

"Slidable contact" as used herein refers to the state or condition of touching between two solid members wherein the relative position of the members may be altered without physically separating the two members.

"Communicating information" refers to transmitting the data representing that information as signals (e.g., electrical, optical, radio, magnetic, etc) over a suitable communication channel (e.g., a private or public network).

As used herein, a component of a system which is "in communication with" or "communicates with" another component of a system receives input from that component and/or provides an output to that component to implement a system function. A component which is "in communication with" or which "communicates with" another component may be, but is not necessarily, physically connected to the other component. For example, the component may communicate information to the other component and/or receive information from the other component. "Input" or "Output" may be in the form of electrical signals, light, data (e.g., spectral data), materials, or may be in the form of an action taken by the system or component of the system or may be in the form of a material (e.g., such as a fluid) being transported from one component to another (directly or indirectly). The term "in communication with" also encompasses a physical connection that may be direct or indirect between one system and another or one component of a system and another.

A "computer-based system" refers to the hardware means, software means, and data storage means used to analyze the information of the present invention. The minimum hardware of the computer-based systems of the present invention comprises a central processing unit (CPU), input means, output means, and data storage means. A skilled artisan can readily appreciate that any one of the currently available computer-based system are suitable for use in the present invention. The data storage means may comprise any manufacture comprising a recording of the present information as described above, or a memory access means that can access such a manufacture. In certain instances a computer-based system may include one or more wireless devices.

To "record" data, programming or other information on a computer readable medium refers to a process for storing information, using any such methods as known in the art. Any convenient data storage structure may be chosen, based on the means used to access the stored information. A variety of data processor programs and formats can be used for storage, e.g. word processing text file, database format, etc.

A "processor" references any hardware and/or software combination that will perform the functions required of it. For example, any processor herein may be a programmable digital microprocessor such as available in the form of an electronic controller, mainframe, server or personal computer (desktop or portable). Where the processor is programmable, suitable programming can be communicated from a remote location to the processor, or previously saved in a computer program product (such as a portable or fixed computer readable storage medium, whether magnetic, optical or solid state device based). For example, a magnetic medium or optical disk may carry the programming, and can be read by a suitable reader communicating with each processor at its corresponding station.

As used herein, a "database" is a collection of information or facts organized according to a data model that determines whether the data is ordered using linked files, hierarchically, according to relational tables, or according to some other model determined by the system operator.

As used herein, an "information management system" refers to a program, or series of programs, which can search a database and determine relationships between data identified as a result of such a search.

As used herein, an "interface on the display of a user device" or "user interface" or "graphical user interface" is a display (comprising text and/or graphical information) displayed by the screen or monitor of a user device connectable to the network which enables a user to interact with a system processor and/or system memory (e.g., including a data base and information management system).

As used herein, "providing access to at least a portion of a database" refers to making information in the database available to user(s) through a visual or auditory means of communication.

As used herein, the term "separation media" refers to a media in which a separation of sample components takes place.

As used herein, "a cleaving agent immobilized in a fluid-transporting feature" refers to a stable association of a cleaving agent with a fluid-transporting feature for a period of time necessary to achieve at least partial digestion of a sample placed in the fluid-transporting feature (e.g., a period of time which allows at least 1% of the sample to be digested). Immobilization need not be permanent. For example, in one aspect, a cleaving agent can be immobilized on magnetic beads that can be selectively delivered to and removed from the fluid-transporting feature by controlling the exposure of the fluid-transporting feature to a magnetic field. The cleaving agent also can move within the channel so long as it remains within the fluid-transporting feature.

"Communicating information" refers to transmitting the data representing that information as signals (e.g., electrical, optical, radio, magnetic, etc) over a suitable communication channel (e.g., a private or public network).

As used herein, a component of a system which is "in communication with" or "communicates with" another component of a system receives input from that component and/or provides an output to that component to implement a system function. A component which is "in communication with" or which "communicates with" another component may be, but is not necessarily, physically connected to the other component. For example, the component may communicate information to the other component and/or receive information from the other component.

"Forwarding" an item refers to any means of getting that item from one location to the next, whether by physically transporting that item or otherwise (where that is possible) and includes, at least in the case of data, physically transporting a medium carrying the data or communicating the data.

A "computer-based system" refers to the hardware means, software means, and data storage means used to analyze the information of the present invention. The minimum hardware of the computer-based systems of the present invention comprises a central processing unit (CPU), input means, output means, and data storage means. A skilled artisan can readily appreciate that any one of the currently available computer-based system are suitable for use in the present invention. The data storage means may comprise any manufacture comprising a recording of the present information as described above, or a memory access means that can access such a manufacture. In certain instances a computer-based system may include one or more wireless devices.

To "record" data, programming or other information on a computer readable medium refers to a process for storing information, using any such methods as known in the art. Any convenient data storage structure may be chosen, based on the means used to access the stored information. A variety of data processor programs and formats can be used for storage, e.g. word processing text file, database format, etc.

A "processor" references any hardware and/or software combination which will perform the functions required of it. For example, any processor herein may be a programmable digital microprocessor such as available in the form of a electronic controller, mainframe, server or personal computer (desktop or portable). Where the processor is programmable, suitable programming can be communicated from a remote location to the processor, or previously saved in a computer program product (such as a portable or fixed computer readable storage medium, whether magnetic, optical or solid state device based). For example, a magnetic medium or optical disk may carry the programming, and can be read by a suitable reader communicating with each processor at its corresponding station.

The term "assessing" and "evaluating" are used interchangeably to refer to any form of measurement, and includes determining if an element is present or not. The terms "determining," "measuring," and "assessing," and "assaying" are used interchangeably and include both quantitative and qualitative determinations. Assessing may be relative or absolute. "Assessing the presence of" includes determining the amount of something present, as well as determining whether it is present or absent.

The term "using" has its conventional meaning, and, as such, means employing, e.g. putting into service, a method or composition to attain an end.

In one aspect, a device according to the invention comprises a first fluid-transporting feature in a first substrate for separating a biopolymer sample according to a first characteristic and a second fluid-transporting feature in a second substrate for separating a biopolymer according to a second different characteristic. The first and the second substrate lie in different planes and the first fluid-transporting feature is in fluid communication with the second fluid-transporting feature. In one aspect, the planes are substantially parallel to each other.

A first and/or second fluid-transporting feature may be used for a variety of types of separation, including, but not limited to, chromatographic, electrophoretic, diffusion-based and/or affinity-based separations. In one aspect, the device is used for multi-dimensional chromatographic separation. The device may be used to perform at least two different types of separation, selected from the group consisting of chromatographic, electrophoretic, diffusion-based, and affinity-based separation. These are merely examples, and other combinations may be envisioned and are included within the scope of the invention.

Sample components that may be separated include, but are not limited to, biopolymers (e.g., nucleic acids or modified or derivative or analogous forms thereof, such as DNA, RNA, PNA, UNA and LNA molecules; proteins, polypeptides, or peptides or modified or derivative or mimetic forms thereof; and carbohydrates) as well as small molecules, organic and inorganic compounds. In certain aspects, a sample comprises labeled components that may be detected by a detector in suitable proximity to one or more fluid-transporting features to detect and distinguish label signals from background signal.

Separation characteristics include, but are not limited to, isoelectric point, charge, polarity, mass, affinity for a binding molecule (e.g., such as an antibody, metal, ligand, receptor, etc.), hydrophobicity, chirality, sequence characteristics, and the like.

In one embodiment, the microfluidic device comprises a first substrate having opposing surfaces, wherein the substrate has a first separation channel formed one of the surfaces. A second substrate, at least partially overlying the first substrate, comprises first and second opposing surfaces and comprises a second separation channel formed in one of its surfaces.

In another embodiment, a first substrate rests on an underlying surface (e.g., a platform or another substrate) and comprises at least one groove running through at least part of the length and/or width of the first substrate. The groove defines the side walls of a channel while the underlying surface forms the base of the channel. The first substrate may be stably associated with the underlying surface by bonding, by mechanical means (e.g., clamping) or by other means to maintain a fluid-tight association. In certain aspects, the second substrate rests on a platform/underlying surface and comprises at least one groove running though at least part of the length and/or width of the second substrate. The platform/underlying surface of the second substrate likewise can form the base of a channel. In one aspect, the second substrate and its underlying surface lie over the first substrate, such that the underlying surface forming the base of the channel defined by the groove on the second substrate serves as a cover for the channel defined by the groove in the first substrate and its underlying surface.

In one such combination, the device comprises five layers (the first underlying surface stably associated with the first substrate, the first substrate, the second underlying surface associated with a second substrate (and covering the first substrate), the second substrate, and a cover for the second substrate. Additional substrates and/or covers may lie on top of the second substrate and/or beneath the first underlying surface stably associated with the first substrate. In certain aspects, at least a portion of the second substate can serve as the cover of a channel in the first substrate and at least a portion of a surface of the first substrate can serve as the underlying surface for the second substrate.

In one aspect, a conduit defined by a first underlying surface, a groove in a first substrate and second surface underlying a second substrate but overlying the first substrate, provides a first separation conduit for separating and/or analyzing components of the fluid sample according to a first characteristic of the component, while a second conduit, defined by a second underlying surface (underlying a second substrate but overlying a first substrate), a groove in a second substrate and a cover for the second substrate provides a second separation conduit for separating and/or analyzing the components of the sample according to a second characteristic. The first and second separation channels can communicate directly or indirectly, e.g., through orthogonal channels or ports which connect the first and second separation channels.

Alternatively, or additionally, a conduit can comprise two-half channels formed by two substrates. Thus, a first substrate can contribute the base and a portion of the side walls of a conduit, while a second substrate can contribute the ceiling and the remaining portion of the side walls of a conduit. However, generally, the device will comprise additional substrate(s) to provide additional conduit(s) which lie in a substantially different plane from the conduit defined by the first and second substrate. Additional substrate/cover combinations may be included in the device. In one aspect, the device comprises at least two substrates, at least three substrates, at least four substrates, or at least five substrates. Substrates (comprising at least one groove) can serve as covers for underlying substrates and/or as platforms for overlying substrates. Generally, a substrate comprises at least one groove running transversely or orthogonally through the substrate. The groove defines at least the side walls of the channel but may or may not define the floor or ceiling (e.g., underlying or overlying surfaces may provide these structures). Permutations of these arrangements, e.g., substrates sharing a cover in addition to substrates comprising separate covers are encompassed within the scope of the invention.

The various layers of the device may be bonded to other layers using methods known in the art such as anodic bonding, sodium silicate bonding, fusion bonding, using thermo bond, or by glass bonding.

To ensure that a sample conduit is fluid-tight, pressure-sealing techniques may be employed, e.g., by using external means (such as clips, tension springs or an associated clamp), by using internal means (such as male and female couplings) or by using of chemical means (e.g., adhesive or welding) to urge the pieces together. However, as with all embodiments described herein the pressure sealing techniques may allow the contacts surfaces to remain in fluid-tight contact under an internal device fluid pressure of up to about 100 megapascals, typically about 0.5 to about 40 megapascals.

In one aspect, the first and second substrate each comprise a least one fluid-transporting feature (e.g., such as a separation conduit). However, in certain aspects, a substrate can comprise a plurality of fluid-transporting features that may be connected in a variety of geometries. For example, the substrate may comprise at least about 2, at least about 4, at least about 8, at least about 16, at least about 32, at least about 48, or at least about 96 fluid-transporting features. In one aspect, the number of features corresponds to the number of wells in an industry standard microtiter plate. In another aspect, the center-to-center distance between features may correspond to the center-to-center distance of wells in an industry standard microtiter plate. In certain aspects, each feature comprises a sample introduction means. In one aspect, a device comprising 96 fluid-transporting features is interfaced to a 96-well microtiter plate, via 96 sample introduction means.

The geometry and dimensions of separation conduits can be varied to suit a particular application. For example, shorter channels will decrease the distance over which sample bands must be transported, but generally channels need to be long enough to provide adequate separation of sample bands given a particular separation methodology being used. In one aspect, fluid flow in at least two features is independently controlled.

In one embodiment, a connecting fluid-transporting feature is provided that connects a first separating conduit on a first substrate with a second separating conduit on a second substrate in a different plane from the first substrate. In one aspect, the first and second substrate are in different parallel planes.

Suitable materials for forming the layers of the device (e.g., such as the first and second substrate) are selected with regard to physical and chemical characteristics that are desirable for proper functioning of the microfluidic device. In one embodiment, a substrate is fabricated from a material that enables formation of high definition (or high "resolution") features, i.e., microchannels, chambers and the like, that are of micron or submicron dimensions. That is, the material must be capable of microfabrication using, e.g., dry etching, wet etching, laser etching, laser ablation, molding, embossing, or the like, so as to have desired miniaturized surface features; preferably, the substrate is capable of being microfabricated in such a manner as to form features in, on and/or through the surface of the substrate. Microstructures can also be formed on the surface of a substrate by adding material thereto, for example, polymer channels can be formed on the surface of a glass substrate using photo-imageable polyimide. Also, all device materials used should be chemically inert and physically stable with respect to any substance with which they comes into contact when used to introduce a fluid sample (e.g., with respect to pH, electric fields, etc.). Suitable materials for forming the present devices include, but are not limited to, polymeric materials, ceramics (including aluminum oxide and the like), glass, metals, composites, and laminates thereof.

Polymeric materials are particularly preferred herein, and will typically be organic polymers that are homopolymers or copolymers, naturally occurring or synthetic, crosslinked or uncrosslinked. Specific polymers of interest include, but are not limited to, polyimides, polycarbonates, polyesters, polyamides, polyethers, polyurethanes, polyfluorocarbons, polystyrenes, poly(acrylonitrile-butadiene-styrene)(ABS), acrylate and acrylic acid polymers such as polymethyl methacrylate, and other substituted and unsubstituted polyolefins, and copolymers thereof. Generally, at least one of the substrate or cover plate comprises a biofouling-resistant polymer when the device is employed to transport biological fluids. Polyimide is of particular interest and has proven to be a highly desirable substrate material in a number of contexts. Polyimides are commercially available, e.g., under the trade name Kapton®, (DuPont, Wilmington, DE) and Upilex® (Ube Industries, Ltd., Japan). Polyetheretherketones (PEEK) also exhibit desirable biofouling resistant properties.

The devices of the invention may also be fabricated from a "composite," i.e., a composition comprised of unlike materials. The composite may be a block composite, e.g., an A-B-A block composite, an A-B-C block composite, or the like. Alternatively, the composite may be a heterogeneous combination of materials, i.e., in which the materials are distinct from separate phases, or a homogeneous combination of unlike materials. As used herein, the term "composite" is used to include a "laminate" composite. A "laminate" refers to a composite material formed from several different bonded layers of identical or different materials. Other preferred composite substrates include polymer laminates, polymer-metal laminates, e.g., polymer coated with copper, a ceramic-in-metal or a polymer-in-metal composite. One preferred composite material is a polyimide laminate formed from a first layer of polyimide such as Kapton®, that has been co-extruded with a second, thin layer of a thermal adhesive form of polyimide known as KJ®, also available from DuPont (Wilmington, Delaware).

In certain aspects, one or more layers of the device comprise an at least partially transparent material.

The present devices can be fabricated using any convenient method, including, but not limited to, micromolding and casting techniques, embossing methods, surface micro-machining and bulk-micromachining. The latter technique involves formation of microstructures by etching directly into a bulk material, typically using wet chemical etching or reactive ion etching ("RIE"). Surface micro-machining involves fabrication from films deposited on the surface of a substrate. An exemplary surface micro-machining process is known as "LIGA." See, for example, Becker *et al.* (1986), "Fabrication of Microstructures with High Aspect Ratios and Great Structural Heights by Synchrotron Radiation Lithography Galvanoforming, and Plastic Moulding (LIGA Process)," *Microelectronic Engineering* 4(1):35-36; Ehrfeld *et al*. (1988), "1988 LIGA Process: Sensor Construction Techniques via X-Ray Lithography," *Tech. Digest from IEEE Solid-State Sensor and Actuator Workshop*, Hilton Head, SC; Guckel *et al*. (1991) *J. Micromech. Microeng*. 1: 135-138. LIGA involves deposition of a relatively thick layer of an X-ray resist on a substrate followed by exposure to high-energy X-ray radiation through an X-ray mask, and removal of the irradiated resist portions using a chemical developer. The LIGA mold so provided can be used to prepare structures having horizontal dimensions--i.e., diameters--on the order of microns.

Another technique for preparing the present devices is laser ablation. In laser ablation, short pulses of intense ultraviolet light are absorbed in a thin surface layer of material. Preferred pulse energies are greater than about 100 millijoules per square centimeter and pulse durations are shorter than about 1 microsecond. Under these conditions, the intense ultraviolet light photo-dissociates the chemical bonds in the substrate surface. The absorbed ultraviolet energy is concentrated in such a small volume of material that it rapidly heats the dissociated fragments and ejects them away from the substrate surface. Because these processes occur so quickly, there is no time for heat to propagate to the surrounding material. As a result, the surrounding region is not melted or otherwise damaged, and the perimeter of ablated features can replicate the shape of the incident optical beam with precision on the scale of about one micron or less. Laser ablation will typically involve use of a high-energy photon laser such as an excimer laser of the F₂, ArF, KrCl, KrF, or XeCl type. However, other ultraviolet light sources with substantially the same optical wavelengths and energy densities may be used as well. Laser ablation techniques are described, for example, by Znotins *et al.* (1987) *Laser Focus Electro Optics,* at pp. 54-70, and in U.S. Patent Nos. 5,291,226 and 5,305,015 to Schantz *et al*.

In one embodiment, the fabrication technique that is used provides for features of sufficiently high definition, i.e., microscale components, channels, chambers, etc., such that precise "microalignment" of these features is possible, i.e., the features are capable of precise and accurate alignment, including, for example, the alignment of complementary microchannels with each other, the alignment of projections and mating depressions, the alignment of grooves and mating ridges, and the like. In one aspect, a feature for alignment on a first substrate may be mated to a receiving feature on one or more covers and/or additional substrates. In this way, a plurality of covers and/or substrates may be aligned. As defined herein, a receiving feature is any feature that can be associated with an aligning feature. For example, a receiving feature that can be associated with a projection or ridge may comprise a depression or groove while a receiving feature, which can be associated with a depression or groove, may comprise a projection or ridge. A receiving feature may be any feature of suitable geometry that may maintain alignment of one or more covers or substrates during a procedure on a substrate of the device such as a separation procedure.

As discussed above, in one aspect, a fluid-transporting feature such as a conduit comprises a separation medium for separating a biopolymer according to a characteristic. The separation medium may comprise a resin, beads or other form of a particulate solid phase or may comprise a monolithic structure formed in the channel comprising a chromatographically active material, or a combination thereof. In certain aspects, a separation medium may comprise a coating on wall(s) of the conduit (side wall(s), the base or floor, the ceiling, or a combination thereof), which comprises a chromatographically active material such as a stationary phase. U.S. Serial No. 09/233,694 (US 6,919,162) ("A Method for Producing High-Surface Area Texturing of a Substrate, Substrates Prepared Thereby and Masks for Use Therein "), inventors Brennen and Swedberg, filed on January 19, 1999, describes a laser ablated high surface area microchannel; U.S. Patent No. 5,770,029 describes a electrophoretic device that allows for integrated sample enrichment means using a high surface area structure; U.S. Patent No. 5,334,310 describes an microchannel having in-situ generated polymer therein. Thus, the interior surface of the conduit may exhibit surface characteristics such adsorption properties and surface area similar to that associated with packing materials. In certain aspects, a separation conduit exhibits a high surface area-to-volume ratio.

A separation medium can comprise a charge-carrying component, a sieving component, a stationary phase, an affinity matrix, and the like. In certain aspects, a separation medium may comprise a gel. In certain other aspects, a separation medium may comprise a filter or membrane.

Separation media which may be included in fluid-transporting features include, but are not limited to, media for ion exchange chromatography (e.g., cation or anion exchange chromatography, and in one aspect SCX), media for size exclusion chromatography (SEC), media for performing chromatofocusing (CF) separation (e.g., based on isolelectric point), media for performing HPLC, RP-HPLC, media for performing gel electrophoresis, media for performing affinity separations and the like.

In one aspect, a separation medium comprises a chromatographic packing material comprising a surface area of about 100 to about 500 m²/g.

A separation medium may be injected or otherwise introduced into a fluid-transporting feature of the device before or after a cover affixed to a substrate. However, in certain aspects, the separation medium is formed in situ in the feature. In still other aspects, a separation medium is packed into a fluid-transporting feature by applying voltages differences or pressure differences at selected features or regions of features. In further aspects, a separation medium comprises particles that are magnetic, paramagnetic or superparamagnetic, and can be added to or removed from features using a magnetic field applied to selective regions of the device.

In one embodiment, the separation medium comprises a stationary phase through which a mobile phase may be flowed. In one aspect, the stationary phase comprises a hydrophobic surface and the mobile phase comprises a mixture of water and organic solvent. In this aspect, the separation medium separates by hydropobcity, as the least hydrophobic component moves through the chromatography bed first, followed by other components, in order of increasing hydrophobicity. In another aspect, however, the content of the mobile phase is constant throughout the separation, while the concentration of an organic solvent used as an eluant varies, i.e., the fluid-transporting feature is used for isocratic chromatographic separation. In still another aspect, the content of the mobile phase changes during separation, i.e., the fluid-transporting feature is used for gradient chromatographic separation. The mobile phase may be introduced through the sample introduction port or through a separate inlet port in communication with a separation conduit comprising the separation medium. Similarly, elution buffer and/or wash buffers may be introduced through the sample introduction port or through a separate inlet port.

In one aspect, the mobile phase is pumped through the capillary column using an applied electric field to create an electro-osmotic flow, similar to that in CZE. In another aspect, the mobile phase is pumped through the capillary column using a high pressure mechanical pump.

The devices may employ operation principles similar to those of ordinary liquid chromatography devices. Thus, there are instances in which ordinary liquid chromatography technology may be incorporated in the practice of the invention. For example, a fluid flow rate regulator for regulating flow rate may be employed to ensure that a mobile phase is delivered to a separation conduit at an appropriate rate and pressure. Such flow rate regulators may be interposed in the flow path between a mobile phase source and an introducing means. The flow rate regulator may also include a flow splitter. Additionally, a flow sensor for determining and optionally controlling the rate of fluid flow into the sample inlet source may be provided. Similarly, as it is known in the art that more than one solvent may be employed to carry out ordinary liquid chromatography processes, the device may include a mobile phase source comprising a mixer for mixing solvents. Further, temperature control means may provide reproducible separation performance.

Aspects of known separation technology may be incorporated in the practice of the present invention. For example, when ordinary liquid chromatography packing material is slurry packed within the separation conduit, a frit structure, micromachined or otherwise, may be included near or at the sample outlet port. The frit structure serves to ensure that the packing material is not displaced from within the sample conduit when a fluid sample and/or a mobile phase are conveyed through the conduit. In addition, it is preferred that the cross-sectional area of the separation conduit is reduced downstream from the frit structure, particularly if the sample outlet port is a part of an electrospray tip as described, for example, in U.S. Serial No. 09/711,804 ("A Device Having an Integrated Protruding Electrospray Emitter and a Method for Producing the Device"), inventors Brennen, Yin and Killeen, filed on November 13, 2000.

In another aspect, the device comprises one or more fluid-transporting features comprising an matrix comprising a solid phase on which one or more receptors are bound. As used herein, a "receptor" may include any molecule that may serve as a binding partner for any molecule to be depleted from a sample. For example a receptor may comprise an antibody or antigenic fragment thereof. However, a "receptor" as used herein is not necessarily a protein, but may also comprise a polypeptide, peptide, an antigen-binding molecule (such as an antibody or affibody), metal, metal coordination compound, carbohydrate (e.g., a lectin, such as concanavalin A or wheat germ agglutinin), aptamer, nucleic acid, co-factor, heparin, polymyxin, dye (such as Cibacron blue F3GA), a hydrocarbon (such as a methyl and phenyl radical that binds hydrophobic proteins), an agent comprising a functional group with affinity for protein moieties (such as a hydrazide, amine, N-hydroxy-succinimide, carboxyl, boronate and organomercury molecule) and generally, or any other molecule with the desired binding specificity.

In a further aspect, a fluid-transporting feature comprising an affinity matrix is in communication with a sample introduction port. The matrix can be used to deplete a sample to reduce its sample complexity. In certain aspects, a fluid-transporting feature comprising an affinity matrix may be used to select desired sample components (e.g., cysteine-containing proteins, for example), in which case the feature may be in communication with a port for providing an elution buffer. In one aspect, the sample introduction port communicates with an affinity conduit which branches into a first conduit and a second conduit, one conduit for receiving flow-through from the affinity column comprising undesired materials and one conduit for receiving eluted, desired components which may be directed to a first separation fluid-transporting feature.

Fluid can be delivered from the channels to the chamber by a number of different methods, including by electroosmosis and/or by electrokinetic means and/or by generating pressure differences at different regions of a fluid-transporting feature.

In certain aspects, the device comprises a fluid-transporting feature on the first and/or second substrate and/or on another substrate of the device (e.g., where the device comprises multiple substrates), for sample processing prior to or after separation according to at least one characteristic. In certain aspects, the sample-processing fluid-transporting feature may comprise a reagent which includes but is not limited to: an enzyme, polymerase, cleaving agent, binding partner, e.g., nucleic acid binding protein, transcription factor, co-factor, receptor, ligand, helicase, topoisomerase, antibody, labeling reagent, derivatizing agent, dye, cell, ions (e.g., for altering pH of a fluid), etc. A sample-processing feature may be in communication with an inlet port for introducing the agent. The sample-processing fluid-transporting feature may also be in communication with a device for altering a condition of a fluid in the feature, for example such as a heating or cooling element, or a light source.

Sample processing may include cleavage of proteins in a sample. For example, the fluid-transporting feature may comprise a cleavage agent, such as a chemical or enzymatic cleavage agent immobilized on a solid phase disposed on walls of the fluid-transporting feature, on or in solution. Suitable cleaving agents include, but are not limited to, enzymes, for example, one or more of: serine proteases (e.g., such as trypsin, hepsin, SCCE, TADG12, TADG14); metallo proteases (e.g., such as PUMP-1); chymotrypsin; cathepsin; pepsin; elastase; pronase; Arg-C; Asp-N; Glu-C; Lys-C; carboxypeptidases A, B. and/or C; dispase; thermolysin; cysteine proteases such as gingipains, TEV protease, factor Xa and the like. Proteases may be isolated from cells or obtained through recombinant techniques. The cleaving agent is not limited to an enzyme and can be a chemical reagent, for example, cyanogen bromide (CNBr), 2-nitro-5- thiocyanobenzoic acid, N-bromosuccinamide and other reactive halogen compounds, hydroxylamine, 1-2M formic or acetic acid, periodate oxidation, 2-(2-nitrophenylsulfenyl)-3-methyl-3-bromoindolenine or o-iodosobenzoic acid (See, for example, Hermodson *et al*., "Methods in Protein Sequence Analysis", ed. Elzinga, Humans Press, Clifton, N.J., pp. 313-323, 1982). When the fluid sample contains nucleotidic moieties, nuclease enzymes capable of nucleotidic digestion, e.g., endonucleases and exonucleases, may be used.

The cleaving agent may be directly bound to a surface (the substrate walls or a solid phase in the channel or reservoir) or may be indirectly bound (e.g., via an antibody or other binding partner). In one embodiment, the device comprises a plurality of sample processing fluid-transporting features. For example, in one aspect, the device comprises a plurality of fluid transport elements, each of which comprises a different type of reagent, e.g., such as a different type of cleaving agent.

In certain aspects, the sample introducing means may be used to carry out digestion of the fluid sample before the sample is introduced into a separation conduit. That is, the conduit of the introducing means may comprise a cleaving agent.

In certain aspects, the device comprises sample-holding reservoirs or conduits, which may at least transiently hold a sample. In certain aspects, a sample-holding reservoir provides a compartment within the device wherein a sample-processing event may occur, i.e., the sample-holding reservoir may also be a sample-processing reservoir. Further, in additional aspects, aliquots of a sample may be exposed to an agent (e.g., such as a cleaving agent) in the sample-holding reservoir for different intervals of time, and then otherwise subjected to the same sample fluid processing/separating conditions, e.g., in parallel fluid-transporting features of the device.

In one aspect, a sample-holding reservoir comprises a waste reservoir, e.g., for receiving fluids comprising undesired components that have passed through a separation conduit. In further aspects, a sample-holding reservoir comprises an outlet port for removing a held fluid, such as a fluid comprising undesired sample components.

In another embodiment, the device comprises one or more focusing elements for concentrating a sample. For example, the device may comprise a means for establishing a pH gradient within a fluid-transporting feature. In one aspect, at least one separation medium in at least one separation path is used to establish a pH gradient in the path. For example the focusing feature may be a conduit in communication at one end with a fluid-transporting feature (e.g., a reservoir) comprising an ampholyte. Electrodes can be used to generate an electric field in the ampholyte-containing fluid-transporting feature. The acidic and basic groups of the molecules of the ampholyte will align themselves accordingly in the electric field, migrate, and in that way generate a temporary or stable pH gradient. A fluid-transporting feature downstream can be used to collect concentrated or focused biopolymer molecules that have passed through the gradient.

However, in certain aspects, the use of ampholytes is avoided. For example, a temperature gradient can be generated and used to form a pH gradient enabling isoelectric focusing.

Different sample introduction means, separating features, sample processing and/or collecting features can be isolated from features in the device using valves operating in different configurations to either release fluid into feature (e.g., conduit or reservoir), remove fluid from a feature, and/or prevent fluid from entering a feature (see, e.g., as described in U.S. Pat. No. 5,240,577, the entirety of which is incorporated by reference herein).

Known valve types include, but are not limited to, ball valves, solenoid valves and gate valves. In one aspect, a valve is constructed which is an integrated portion of the device. Controlling voltage differences and/or pressure differences in various portions of the device also can be used to achieve the same effect.

In one embodiment, the device provides for fluid transport between a plurality of conduits formed on a plurality of substrates at least two of which lie on different (e.g., substantially parallel) planes.

In one embodiment of the invention, a substrate of the device (either or both the first and second substrate) comprising a surface has a first and a second channel formed in the surface. When a cover plate is arranged over the surface, the cover plate in combination with the first and second channels defines a first and a second conduit, respectively. At least one of the conduits is constructed for separating the components of the fluid sample according to a characteristic of the component. In one aspect, a sample inlet port is provided in fluid communication with a valve, wherein the valve is constructed for providing selective fluid communication from the inlet port to either one of the conduits to allow a fluid sample introduced from a sample source to be conveyed in a defined sample flow path such that the sample travels, in order, through the sample inlet port, the selected conduit and a sample outlet port associated with the conduit. In one embodiment, the device comprises a sample inlet or sample introducing means that introduces a predetermined volume of fluid sample appropriate to the desired separation processes and the dimensions of the device. In one aspect, the predetermined volume is less than about 5 microliters. In another aspect, the predetermined volume is about 0.005 about 1 microliters. In a further aspect, the predetermined volume is about 0.01 to about 0.1 microliters.

In certain aspects, the sample inlet port communicates with a mobile phase source.

In one embodiment, a sample inlet port is provided in fluid communication with a first and second fluid-transporting feature (e.g., a first and second conduit), each provided on different substrates (e.g., substantially parallel substrates lying in different planes) to allow a fluid sample introduced from a sample source to be conveyed in a defined sample flow path such that the sample travels, in order, through the sample inlet port, the first separation conduit and a second separation conduit. In one aspect, the first separation conduit comprises a first separation conduit outlet port that communicates with a second separation conduit inlet port either directly or indirectly through a connecting fluid-transporting feature (e.g., a connecting conduit). In another aspect, the second separation conduit comprises a second separation outlet port for interfacing with additional separation conduits or with a sample analysis device. In a further aspect, the first separation conduit is in indirect fluid communication with the second separation conduit, as fluid from the first separation conduit may be directed to additional separation conduits, or sample processing or holding fluid-transporting elements as described further below.

A valve mechanism or electrodes in suitable proximity to the outlet port of the first conduit and inlet port of the second conduit may be provided to promote fluid flow from the first conduit on the first substrate to the second conduit on the second substrate (or to a connecting fluid-transporting feature on the second substrate that communicates with the second conduit). Fluid can be moved from one substrate to another via electroosmosis and/or by electrokinetic means and/or by generating pressure differences at different regions of one or more fluid-transporting features.

In certain aspects, the device comprises a plurality of introducing means, at least one means for introducing a sample to a fluid-transporting feature of the device and at least one means for introducing a fluid comprising at least partially separated sample components from one separating conduit to another separating conduit, such as a separating conduit on a different substrate.

In certain aspects, introduction of a fluid comprising at least partially separated sample components to a second separation conduit is coordinated with monitoring of the separation process in the first separation conduit; for example, detection of a sample plug comprising labeled sample components traveling through a first conduit can be coordinated with injection of the sample plug at a selected time into the inlet port of a second separation conduit.

In alternative or additional embodiments, a sample introduction means is provided which introduces a predetermined volume of fluid from a first separation conduit to a second separation conduit.

In one embodiment, the device includes a first substrate comprising first and second substantially planar opposing surfaces respectively, and is comprised of a material that is substantially inert with respect to fluids that will be transported through the device. The first substrate has a fluid-transporting feature in the form of a sample channel in the first planar surface. The sample channel may be straight, serpentine, spiral, or have generally any geometry. The shape of the channel in cross-section also may vary and can be semi-circular, rectangular, square, rhomboid, and the like. The channels can be formed in a wide range of aspect ratios (e.g., greater, less than or equal to 1). In one aspect, the cross-sectional shape of a channel may vary along its length. The device may also have a plurality of channels on one or more substrates.

In one aspect, a second substrate may be aligned with the first substrate to achieve fluid-tight contact between the substrates and in certain aspects, alignment features are employed to align the substrates.

A cylindrical conduit extending through the second substrate in a direction orthogonal to the first substrate surface can be used to provide communication between a fluid transporting feature on the first substrate with a fluid-transporting feature of a second substrate. In one aspect, the connecting conduit extends through a cover of the first substrate which serves as an underlying surface for the second substrate.

In other embodiments, however, the second substrate itself acts as a cover for fluid-transporting features on the first substrate (e.g., the surface directly underlying the second substrate belongs to the first substrate).

In one embodiment, fluid flow between a first substrate and a second substrate may be controllable through the use of a switching structure. In one aspect, the switching structure that employs motion (e.g., such as rotational or linear motion, or a combination thereof) to effect flow path switching. In another aspect, a substrate contact surface of the multi-substrate device is positioned in slidable and fluid-tight contact with a contact surface of the switching structure to allow for controllable alignment between fluid-transporting features of at least a first and second substrate. Thus, in certain aspects, fluid communication can be provided between the fluid-transporting features through a small area. In one aspect, the fluid-transporting features align to form a fluid-transporting conduit having a controllable cross-sectional area.

The contact surface of the switching structure is capable of interfacing closely with the contact surface of a substrate to achieve fluid-tight contact between the surfaces. To ensure that a contact is fluid-tight, pressure-sealing techniques may be employed, e.g., by using external means to urge the pieces together (such as clips, tension springs or a clamping apparatus). However, excessive pressure that precludes the substrate and switching structure from slidable contact should be avoided. The optimal pressure can be determined through routine experimentation. However, as with all embodiments described herein, such pressure sealing techniques may allow the contact surfaces to remain in fluid-tight contact under an internal device fluid pressure of up to about 100 megapascals, typically about 0.5 to about 40 megapascals. The switching structure 63 may be fabricated from materials, which are the same as or similar to those used to fabricate substrates or substrate covers. In certain aspects, the switching structure comprises a handle that provides for ease in manipulation of the switching structure.

Further, the switching structure can be aligned over a substrate contact surface by guides protruding therefrom or other alignment features (not shown). In one aspect, at least a portion of a fluid transporting feature in the switching structure is alignable with at least a portion of a fluid-transporting feature of an underlying substrate such that movement of the switching structure (e.g., sliding and/or rotation) allows fluid communication between the fluid-transporting features in a first alignment position. Movement to a second alignment position may alter fluid communication. In one aspect, movement to a second alignment position prevents fluid communication between a substrate fluid-transporting feature and a fluid transporting feature of the switching structure. Methods of fabricating and aligning switching structures with underlying substrates are disclosed in U.S. Patent Publications 2003/0224531 and 2003/0159993, for example, the entireties of which are incorporated by reference herein.

In certain aspects, movement to the second alignment position can provide fluid communication between another fluid-transporting feature on the substrate and the same or a different fluid-transporting feature on the switching structure. In certain other aspects, the switching structure may be used to provide fluid communication between fluid-transporting features on a first and second substrate by aligning at least portions of those features with a connecting fluid-transporting feature on the switching substrate. In one aspect, movement of the switching structure alters communication between fluid transporting feature(s) of the switching structure and a second substrate, between the switching structure and a first and second substrate, and/or between a switching structure and a first and second substrate.

For example, in certain aspects, a first substrate underlying a second substrate communicates with a fluid-transporting feature on the switching structure through one or more orthogonal conduits in a second substrate that immediately underlies the switching structure. Fluid from the first substrate may be directed to the second substrate by directing fluid flow from a fluid-transporting feature on the first substrate through an orthogonal channel on the second substrate to a fluid-transporting feature on the switching substrate which may be controllably positioned in communication with a fluid-transporting feature on the second substrate through movement (e.g., rotation) of the switching structure. In certain aspects, the fluid-transporting feature on the switching structure comprises a curved geometry that may selectively communicate with one or more orthogonal conduits in the second substrate that may communicate with fluid-transporting features on the second and/or first substrate.

The geometries and relative arrangement of fluid-transporting features on substrates (and/or covers) and switching structures can be manipulated to generate a plurality of selectable flow paths for sample separation. In one aspect, the relative arrangement of fluid transporting features on a first substrate comprising a first separation conduit, a second substrate comprising a second separation conduit and a switching structure comprising a fluid-transporting feature is such that movement of the switching structure from a first alignment position to a second alignment position provides a flow path from a sample inlet in communication with the first substrate to the first separation conduit on the first substrate to the second separation conduit on the second substrate. Additional separating conduits may be provided on the first and/or second substrate and connected. In certain aspects, additional substrates may be provided and connected to the first and second substrates, e.g., via switching structures and/or via alignment of fluid-transporting features on the first or second substrate.

In one aspect, a fluid-transporting feature of the switching structure communicates with at least two fluid transporting features of a first and/or second substrate. In one aspect, movement of a switching structure from a first position to a second position, alters fluid communication between the switching structure of at least one of the fluid transporting features of the first and/or second substrate. For example, movement to the second position may prevent fluid communication between one of the fluid-transporting features of one substrate while permitting fluid communication with another fluid-transporting feature of the same or different substrate. In certain aspects, movement to the second position prevents fluid communication with both fluid-transporting features. In certain other aspects, movement to the second position, while preventing fluid communication with one or both features of the first and/or second substrate may provide communication with one or more additional fluid transporting features on the first and/or second and/or yet another substrate. Additional permutations are possible and are encompassed within the scope of the invention.

In one aspect, as shown in Figure 1A, a fluid-transporting feature of a switching structure is curved, e.g., forming an approximately semi-circular fluid-transporting feature comprising a first terminus and a second terminus. The first and second ends may connect inlets or outlets of fluid-transporting features of an underlying and/or overlying substrate. Rotating the switching structure may be used to selectively provide or prevent fluid communication between different fluid-transporting features of a substrate and/or between different fluid-transporting features on a first and second substrate.

In certain aspects, the switching structure may be used to controllably provide predetermined volumes of fluid to one or more fluid-transporting features on a substrate.

In the embodiment shown in Figure 1A, the device comprises a first separation conduit packed with a strong cation exchange media and a second separation conduit packed with a reverse phase liquid chromatography media. The device comprises a sample inlet port that is connectable to an autosampler as well as a waste port for receiving waste fluids from one or more fluid-transporting features of the device. The first separation conduit comprises a larger internal diameter than the second separation conduit. In one aspect, fluid flows through the first separation conduit at a rate of about 1 - 50 µl/minute (e.g., under the control of a pump controlling flow from an autosampler), while fluid flows through the second separation conduit at a rate of about 100-300 nl/minute (e.g., under the control of a separate pump (shown in the Figure as the "RP pump").

In one embodiment, the switching structure includes a conduit ("switching conduit") which selectively connects a fluid from the first separation conduit to the second separation conduit. The switching conduit comprises an internal diameter intermediate between that of the first separation conduit and the second separation conduit and can run at either flow rate depending on its flow path. In one aspect, the switching conduit is movable from a load position in which it receives fluid from the first separation conduit (e.g., at 1-50 µl/min) to a run position in which it transfers fluid received from the first separation conduit to a second separation conduit (e.g., at 100-300 nl/min). Flow through the switching conduit can be independently controlled by the autosampler pump or the RP pump depending on its position.

In one embodiment, the switching conduit comprises the separation medium as the second separation conduit. In one aspect, the switching conduit comprises the same type of stationary phase as the second separation conduit.

In another embodiment, as shown in Figure 1B, a plurality of switching conduits can be provided for connecting and/or providing fluid flowing from a first separation conduit of a first substrate to one or more separation conduits of a second substrate which lies on a different plane from the first substrate.

It should be apparent to those of skill in the art based on the instant disclosure that other combinations of separation media are possible and are encompassed within the scope of the invention. For example, a strong anion exchange media can be paired with a reverse phase media and an affinity media may be paired with a reverse phase media. Like separation media may also be paired, e.g., such as different reverse phase media; however, in one aspect, a first and second separation conduit on first and second substrates separate according to a different characteristic.

As shown in the Figure, the switching structure is configured as a circular plate comprising a contact surface, which can move slidably over the second substrate to switch from a first alignment position to at least a second alignment position. Movement to another alignment position, for example, by rotation of the switching structure, may disrupt communication with certain fluid-transporting features but not others and may provide communication between new combinations of features that was not provided in the previous alignment position.

Figures 2A and B show components of a multi-substrate device according to one aspect of the invention.

Figure 2A shows a substrate comprising a separation conduit for performing a separation according to a first characteristic of sample components, such as charge. In the embodiment shown in the Figure, the separation conduit is curved and comprises an inlet terminus and an outlet terminus.

Figure 2B shows a substrate comprising a separation conduit for performing a separation according to a second characteristic of sample components (such as hydrophobicity). One end of the conduit can communicate with one or more fluid transporting features of an overlying switching structure while another end of the substrate communicates with a device which interfaces with an analysis module, such as a mass spectrometer, for analyzing separated sample components.

As shown in Figure 2C, in one aspect, when the substrate shown in Figure 2A overlies the substrate shown in Figure 2B, a switching structure can be used to selectively provide for fluid communication between various fluid transporting features of the device. In one aspect, when the device and switching structure are in a "load" position, a sample is introduced into the sample introduction port 1 and flows through the first dimension separation conduit to fluid transporting feature 6. In this position, fluid-transporting feature 6 is placed in fluid communication with an enrichment conduit (4-1) (e.g., comprising a affinity matrix, such as an immunoaffinity matrix) via a groove 6-1; waste from the enrichment conduit is deliverable to a waste conduit via groove 4-5.

In a second position (e.g., a "run" position), a pump for pumping a mobile phase solution (e.g., such as a mobile phase gradient) is connected to the enrichment conduit via groove 2-1. In the second position, the enrichment conduit is in fluid communication to the second separation conduit (e.g., a RP LC conduit) via groove 4-3. Sample components flow from the enrichment column in the mobile phase to the second separation conduit for separation according to a second characteristic (e.g., such as hydrophobicity).

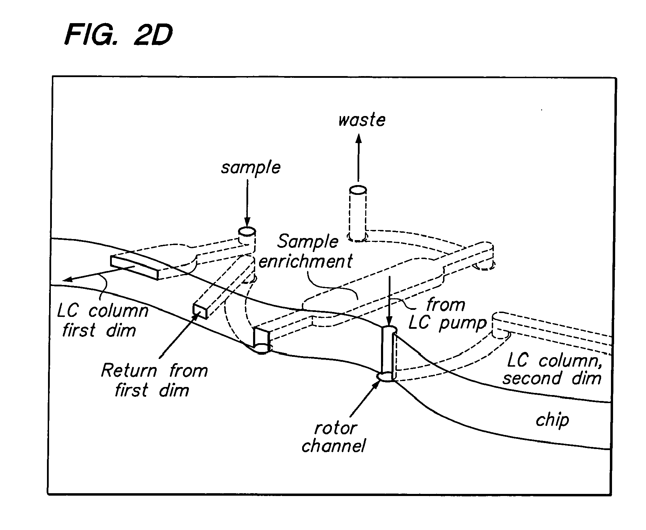

Figure 2D shows a perspective view of the device and relationships between various fluid-transporting features of the first and second substrate and switching structure. It should be obvious to those of skill in the art that other geometries are possible and are encompassed within the scope of the invention.

In certain embodiments, the geometry of fluid-transporting features is selected to allow for serial separation or parallel sample separation. For example, a first and a second channel can be formed in a first substrate surface and a cover plate in combination with the first and second channels can define a first and a second conduit, respectively. In one aspect, a sample inlet port is in fluid communication with a valve (or other mechanism for controlling fluid flow) and the valve is constructed for providing selective fluid communication between the inlet port and either one of the conduits. As a result, a fluid sample introduced from a sample source can be conveyed in a defined sample flow path that travels, in order, through the sample inlet port, the selected conduit, and a sample outlet port associated with the selected conduit. At least one of the conduits is constructed for separating the components of the fluid sample according to a characteristic of the components.

In one aspect, at least two of the conduits are constructed for separating the components of the fluid sample according to the same or a different component property. In certain other embodiments, multiple sample inlet ports are provided which each communicate with separate fluid-transporting features. Movement of fluid/samples through the inlets may be independent of each other or coordinated (e.g., such as in parallel sample processing). Combinations of serial and parallel fluid flow may also be provided. In certain aspects, as discussed above, the number of sample inlets corresponds to the number of wells in an industry standard microtiter plate or to the number of wells in a row or column of such a plate.

In addition, mechanisms relating to on-device features that can be used to uptake sample from a sample source such as vials and titer plates may be employed as well in interfacing relation to the introduction means. *See* U.S. Serial No. 09/570,948 (US 6,602,472), inventors Zimmermann and Ple, filed on May 15, 2000.

Parallel and/or serial sample processing may be combined with parallel and/or serial multi-dimensional separations. For example, at least one first conduit may provide a first dimension of separation for sample components according to a first characteristic, such as, for example, through size exclusion chromatography, ion chromatography, capillary electrophoresis, isoelectric focusing, or electrophoretic focusing via field gradient, or other separation techniques. Then, fractions from the first dimension separation can be directed into a second separation conduit for separation by a second different characteristic using one or more methods above or other separation techniques.

An optional sample processing chamber may be provided upstream and/or downstream of separation conduits, e.g., to cleave a biopolymer, to subject a biopolymer to an enzymatic reaction (e.g., cleavage, amplification, ligation), to subject a biopolymer to a chemical reaction, and/or to expose a sample component to a condition (e.g., a temperature, pH, exposure to light, etc.). An optional mixing chamber may be provided to mix a sample with fluid and/or sample components, e.g., from a sample inlet port or from another conduit on the same or different substrate. An optional sample holding chamber may be provided which can hold a sample for a selected time interval (e.g., such as the time interval it takes for a previous reaction in the same or a different chamber to occur or for separation to take place in a downstream fluid-transporting feature). In certain aspects, such optional chambers may provide a plurality of functions. For example, a processing chamber may be used as a mixing chamber and/or as a holding chamber, simultaneously or sequentially.

The invention also provides systems that comprise the multi-substrate devices described herein. In one embodiment, a system according to the invention comprises any of the devices described above and a detector in suitable proximity to a fluid-transporting feature to detect the presence of a component and/or to monitor fluid flow through at least a portion of the fluid-transporting feature.

In another embodiment, a detector is placed in proximity to a separation conduit to enable a user to monitor separation efficiency and/or sample characteristics. In certain aspects, a plurality of detectors is interfaced with the system. For example, detectors may be placed at various flow points of the system to enable a user to monitor separation efficiency, and may be in proximity to both a first and second separation fluid-transporting feature. Detectors may monitor changes in refractive index, ultraviolet and/or visible light absorption, light scattering or fluorescence after excitation of a sample (e.g., a solution comprising proteins) with light of a suitable wavelength.

Detectors additionally can be coupled to cameras, appropriate filter systems, and photomultiplier tubes. The detectors need not be limited to optical detectors, but can include any detector used for detection in liquid chromatography and capillary electrophoresis, including electrochemical, conductivity, and the like.

In another embodiment, the system comprises an analysis system for analyzing separated component(s) in a sample that have flowed through at least a first and second separation conduit. In one aspect, the analysis system comprises or is connectable to a processor for obtaining signals from a detector and converting these to data relating to properties of molecules being separated by the multisubstrate devices described herein. The detector and/or analysis system may be directly or indirectly coupled to the multisubstrate devices. In one embodiment, an electrospray device is interfaced with a multisubstrate device according to the invention and delivers separated or at least partially separated molecules (e.g., such as peptides) to a detector/analysis system such as a mass spectrometry device. Electrospray devices are known in the art. See, e.g., Wilm and Mann, Anal. Chem. 1996;68: 1-8; Ramsey *et al*., Anal. Chem. 1997;69: 1174-1178; Xue *et al*., Anal Chem. 1997;69: 426-430; and U.S. Pat. No. 6,245,227. In one aspect, the multisubstrate device comprises an integrated electrospray emitter such as described in U.S. Patent Publication 2004/0156753. In the case where the protein analysis system comprises a MALDI device, an automated spotter may be used to connected a separation capillary to a MALDI device.

In other aspects, the second separation conduit is in fluid communication with a collector, such as a sample vial, plate, or capillary or with another fluid-transporting feature for communication with another separation conduit on the same or a different substrate. A collector may serve as a storage device or represent an intermediary to another device that uses and/or analyzes collected sample fractions.

Mass spectrometry technologies are well known in the art and may involve, for example, laser desorption and ionization technologies, whose use in conjunction with devices are described in U.S. Patent Nos. 5,705,813 and 5,716,825. In the alternative or in addition, the analyzer may comprise a source of electromagnetic radiation configured to generate electromagnetic radiation of a predetermined wavelength. Depending on the intrinsic properties of the fluid sample and/or any molecular labels used, the radiation may be ultraviolet, visible or infrared radiation.

In one aspect, the analysis system comprises or is in communication with a processor for determining the amino acid sequences of protein digestion products or peptides and/or for correlating mass/charge properties of peptides or derivatives thereof (or ionized fragments thereof) with a corresponding protein from which the peptide (or derivative thereof) derives. In another aspect, the system further comprises a memory in which data relating to molecules separated by multi-substrate devices according to the invention may be stored. The processor may be used to monitor and/or control other system functions, e.g., such as the opening or closing of valves or changes in potential in one or more fluid-transporting features.

The invention further provides methods for using devices and systems disclosed herein. In one embodiment, a method according to the invention comprises introducing a sample into a first fluid-transporting feature of a first substrate and separating sample components according to a first characteristic. The sample separated according to the at least a first characteristic is delivered to a second fluid transporting feature of a second substrate which lies in a different plane from the first substrate. In one aspect, the second substrate is substantially parallel to the first substrate. The second substrate may form a cover for the first substrate or may be separated from the first substrate by a cover. In another aspect, the first and second substrates are connected to each other by connecting fluid-transporting features. For example, an outlet portion of a fluid-transporting feature on the first substrate may be in fluid communication with an inlet portion of a fluid-transporting feature of a second substrate.

In one embodiment, communication between a first and second substrate is controlled through a switching device, which can be moved to at least two positions. For example, in a first position, the switching device provides fluid communication between the first and second substrate while in a second position the switching device may eliminate fluid communication between the first and second substrate. The switching device may be between the first and second substrate, providing communication between the substrate through one or more fluid-transporting features that are orthogonal to the first and second substrate. In one embodiment, the switching device overlies the first and second substrate and may provide fluid communication between the first and second substrate through movement of the switching structure relative to the first and second substrate such that in one position the switching structure connects an outlet port of a fluid transporting feature of the first substrate to an inlet port of a fluid transporting feature of the second substrate through a connecting channel in the switching device. The outlet port of the first substrate may be connected to the inlet port of a connecting channel in the second substrate, which comprises an outlet port in communication with the connecting channel of the switching structure when the switching structure is in a first position. Fluid flows through the connecting channel and into the inlet channel of the second substrate through an outlet port in the connecting channel. Movement of the switching structure to a second position may disrupt communication between the switching structure and the first substrate and/or the second substrate, thereby preventing fluid flow between substrates.

In certain embodiments, while movement to a first position may permit communication between a first fluid transporting feature on a first substrate and second fluid transporting feature on the second substrate, it may disrupt communication between a third fluid transporting feature on the first substrate and the second fluid transporting feature on the second substrate or a fourth fluid transporting feature on the second substrate. Many alternate permutations are possible and are encompassed within the scope of the invention.

Samples flowing through a first separating channel may be evaluated by an analysis system after passing through a second separating channel. In one aspect, the first separating channel may comprise or be connected to a channel that splits in two paths, one which connects with the second separating channel and one which connects with the same or a different analysis system such that an aliquot of the separated sample may be evaluated by the analysis system while an another aliquot is subjected to further separation and/or analysis by the same or a different analysis system. In certain embodiments, the second separating channel comprises or is connected to a channel that splits into two paths, one path which permits a portion of a sample plug to be analyzed by an analysis system and a second path which may permit further or a different type of analysis or may permit isolation of components of the sample plug. Movement to and from separating channels and other fluid transporting features can be controlled using mechanisms known in the art, for example, through pressure-modifying mechanisms.

In one embodiment, a separating conduit is connected to, or connectable to, both a sample inlet port and a mobile-phase holding conduit. A switching plate may be slidably rotated to provide communication between the mobile-phase holding conduit and the separation conduit. A pressurizing mechanism may be used to provide a motive force to deliver the mobile phase contained in the mobile-phase holding conduit through the sample introduction conduit and into the separation conduit. As a result, the fluid sample contained within the sample introduction conduit is conveyed though the separation conduit. In one aspect, separation within the separation conduit is carried out using a mobile-phase flow rate of no more than about 1 µL/min. However, flow rates of about 0.01 µL/min to about 10 µL/min may be employed, with flow rates of about 0.1 µL/min to about 2 µL/min preferred. The fluid sample is then separated into sample components according to a known characteristic and emerges from an outlet port at the terminus of the separation conduit, for further separation, analysis, holding and/or processing. In one aspect, the flow rate in a first separation conduit separating according to a first characteristic is higher than the flow rate for a second separation conduit separating according to a second characteristic. For example, in one aspect, the flow rate for the first dimension separation ranges from about 1 - 20 µl/min, while the flow rate for the second dimension ranges from about 0.01- 1µl/min.

In one aspect, the choice of buffers and reagents in the upstream separation conduit will be optimized to be compatible with downstream fluid-transporting features with which it communicates. For example, a buffer or solvent may be selected which maintains the solubility of molecules in a sample while not substantially affecting processes occurring in downstream conduit(s). Conduits for providing dilution buffers and/or exchange matrices may be included at appropriate locations/flow paths in the device to dilute/exchange fluids and components in fluids as appropriate.

In another aspect, the device comprises one or more mechanisms for generating a gradient in one or more fluid-transporting features of the device. For example, a cascade of conduits may be provided to split and/or mix streams of liquids (for example, water and methanol). See, e.g., as described in U.S. Patent Publications 2004/0156753 and 2003/0159993, for example.

In one embodiment, the device comprises a gradient-generation means. In one aspect, the gradient-generation means is formed at least in part within one substrate. Alternatively, or additionally, the gradient-generation means is formed at least in part within a cover, within a second substrate or within a switching structure. In another aspect, the integrated gradient-generation means comprises at least one mobile-phase holding conduit having a length defined by an upstream terminus and a downstream terminus and at least one mobile phase inlet port. In certain embodiments, the mobile-phase holding conduit comprises a plurality of inlet ports arranged along the length of the mobile-phase holding conduit. In certain other embodiments, the mobile-phase holding conduit communicates with a least one mobile-phase outlet port (generally downstream from the inlet ports). In one aspect, the device further includes a mechanism for introducing the mobile phase from the mobile-phase holding conduit through the mobile- phase outlet port and into the inlet port of a separation conduit. The gradient-generation means may further include a distribution conduit in fluid communication with the mobile-phase holding means. In one aspect, the distribution conduit is substantially parallel to the mobile-phase holding conduit. The distribution conduit may comprise a plurality of outlet ports. In one aspect, each outlet port fluidly communicates via a mixing conduit with an inlet port of a mobile-phase conduit. The distribution conduit may also comprise an inlet port located between each of its outlet ports. In certain aspects, where the gradient-generation means comprises more than one mobile phase source, at least one of the sources may comprise a selected mobile phase component while another does not. The device may additionally include a mechanism for controlling fluid communication between the gradient-generation means and a separation conduit (e.g., a source of pressure differential or a source of electrokinetic or electrosmotic force).

The present invention is further illustrated by the following example. The example is provided to aid in the understanding of the invention and is not to be construed as a limitation thereof.

### EXAMPLE 1.

A human serum sample was obtained from a healthy patient and the six most abundant serum proteins in the sample (i.e.. HSA, IgG, IgA, haptoglobin, transferring, and antitrypsin) were removed using an Agilent Technologies Multiple Affinity Removal LC column (see, e.g., www.agilent.com/chem/affinity) according to the manufacturer's instructions and as generally described in Szafranski et al., Pharmacogenomics September 2004;pp 40-46. 5 µl (50 µg total protein) of the immunoaffinity-depleted sample was introduced into an SCX separation conduit on a first substrate using an AGILENT 1100 autosampler. Breakthrough from the SCX separation conduit was captured by a sample enrichment conduit and subsequently separated by a reverse phase separation conduit before nano-electrospray. After the first reverse phase gradient was completed, the rotary valve interface was switched to load position and 5µl of 10 mM KCL is injected to the SCX column. 10 mM KCl step elutes certain low retaining peptides from the SCX column. The enrichment column then trapped these peptides before the second reverse phase LC gradient separation. Subsequent salt steps are 20 mM, 50 mM, 75 mM, 100 mM, 150 mM, 200 mM, 500 mM and 1 M KCl respectively. The first LC/MS run (sample loading to SCX breakthrough fraction) and the following nine LC/Ms runs after salt step elutions from SCX are overlay plotted in Figure 3.

The ten LC/MS/MS run data was searched against NCBI database with Spectrum Mill protein workbench software. A total of 54 proteins were identified from the sample. The most abundant proteins in the sample are listed in Table 1.

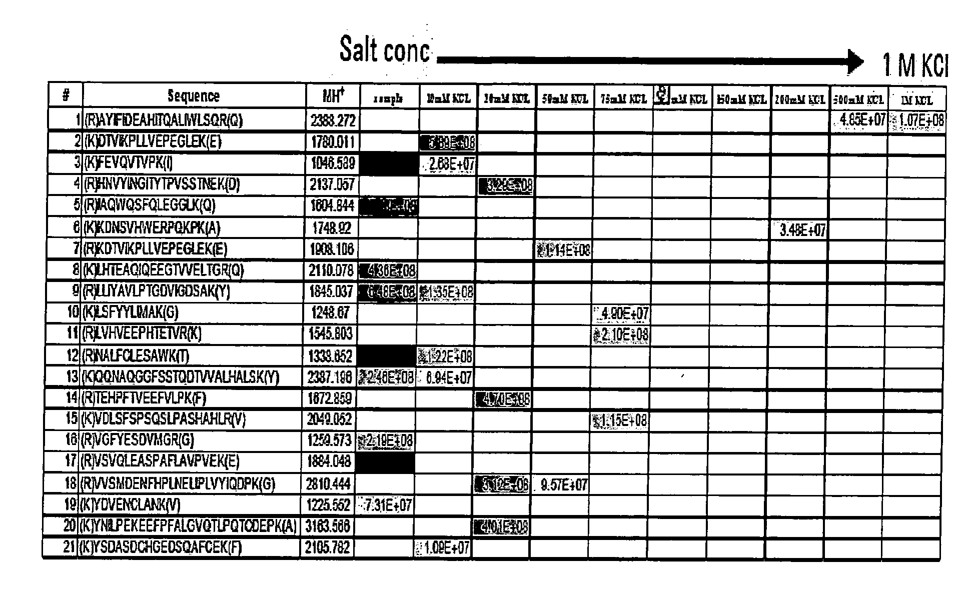

The six common abundant proteins in the natural state of human serum sample (HSA, IgG, IgA, haptoglobin, transferrin, and antitrypsin) were successfully removed by the immunoaffinity conduit. A total of 21 peptides were been identified which corresponded to alpha 2 macroglobulin precursor. These peptides were first separated by SCX and then by RP separation conduits of a device as shown in Figure 2C. The distribution among different salt steps is listed in Table 2.

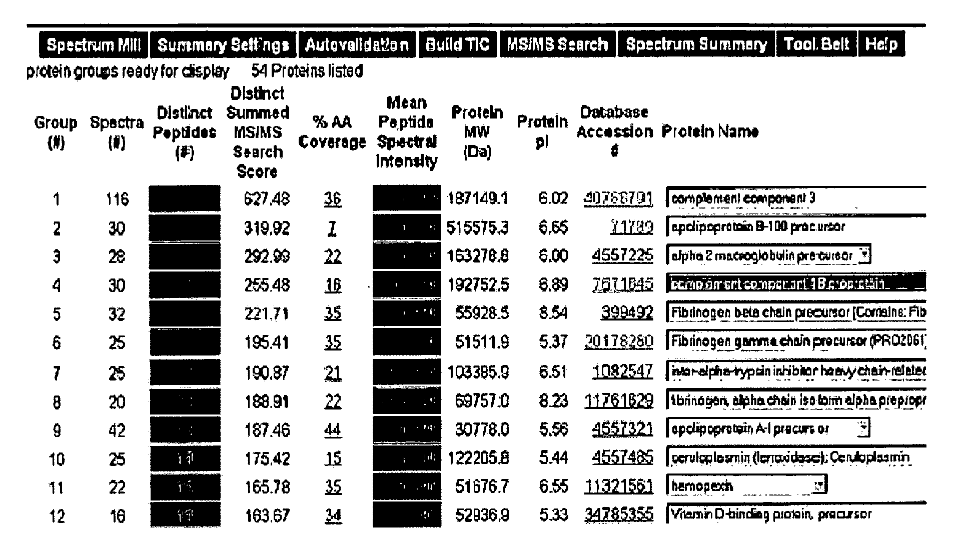

All publications, including patents, patent applications, and literature references, cited herein are incorporated herein in their entirety by reference and for all purposes to the same extent as if each individual publication was specifically and individually indicated to be incorporated by reference in its entirety for all purposes.

Although the foregoing invention has been described in some detail by way of illustration and example for purposes of clarity of understanding, it is readily apparent to those of ordinary skill in the art in light of the teachings of this invention that certain changes and modifications may be made thereto without departing from the scope of the appended claims.

## Claims

1. A device including:
a first substrate including a first separation fluid-transporting feature for separating a molecules in a sample according to a first characteristic and
a second substrate including a second fluid-transporting feature for separating molecules in a sample according to a second characteristic;
wherein the first and second substrates lie in different planes and the first and second separation fluid-transporting features are connectable to each other.

2. A device as claimed in claim 1, wherein the first and second characteristics are different from each other.

3. A device as claimed in claim 1, 2 or 3 wherein the first and second characteristics are the same.

4. A device as claimed in claim 1, wherein fluid flow through at least one fluid-transporting feature of the device may be controlled by establishing a pressure differential at different regions of the fluid-transporting feature.

5. A device as claimed in any of claims 1 to 4, wherein the first and second separation fluid-transporting features are connectable to each other via a switching structure in slidable and fluid-tight contact with the first substrate and/or the second substrate, which allows for controllable formation of a plurality of different flow paths upon alignment of one or more substrate fluid-transporting features with a fluid transporting feature of the switching structure.

6. A device as claimed in any preceding claim, wherein the first and second fluid-transporting features include separation conduits, wherein each conduit communicates with an inlet port and an outlet port.

7. A device as claimed in any preceding claim, wherein a separation fluid-transporting feature includes separation medium.

8. A device as claimed in any preceding claim, wherein a separation fluid-transporting feature includes a polymeric material.

9. A device as claimed in claim 8, wherein the polymeric material is formed in *situ* in the device.

10. A device as claimed in any preceding claim, wherein a separation characteristic is selected from the group consisting of isoelectric point, charge, polarity, mass, molecular weight, affinity for a binding molecule, hydrophobicity, chirality, and sequence characteristics of a biopolymer.

11. A device as claimed in any preceding claim, wherein the device includes a fluid-transporting feature including an affinity matrix.

12. A device as claimed in any preceding claim, including an affinity matrix that includes binding partners for proteins to be depleted from a sample prior to introducing the sample into a separation fluid-transporting feature.

13. A device as claimed in any preceding claim, wherein the device further includes a fluid-transporting feature for processing a sample before or after separation.

14. A device as claimed in claim 13, wherein the fluid-transporting feature for processing comprises a cleavage agent.

15. A device as claimed in claim 14, wherein the cleavage agent comprises an agent for cleaving peptide bonds.

16. A device of as claimed in any of claims 5 to 15, wherein the switching structure comprises a switching conduit for providing a fluid from the first separation fluid-transporting feature to the second separation fluid-transporting feature when moved from a first position to a second position.

17. A device as claimed in claim 16, wherein the switching structure comprises a plurality of switching conduits for selectively providing fluid from the first separation fluid-transporting feature to at least one second separation fluid-transporting feature on the second substrate.

18. A device as claimed in claim 17, wherein the second substrate comprises a plurality of second separation fluid-transporting features.

19. A device as claimed in claim 16, 17 or 18, wherein flow rate of fluid flowing through the switching conduit can be altered based on the position of the switching conduit relative to the first and second separation conduits.

20. A device as claimed in claim 19, wherein the flow rate of fluid flowing through the switching conduit is controllable by a pump for controlling flow through the first separation conduit when the switching conduit is in a first position and in fluid communication with the first separation conduit, and/or
wherein the flow rate of fluid flowing through the switching conduit is controllable by a pump for controlling flow of fluid through the second separation conduit, when the switching conduit is in a second position and in fluid communication with the second separation conduit.

21. A device as claimed in any preceding claim, wherein the device comprises a sample-holding reservoir for holding a sample prior to or after separation by a separation fluid-transporting feature.

22. A device as claimed in claim 21, wherein the sample-holding reservoir comprises a waste reservoir.

23. A device as claimed in claim 22, wherein the waste-reservoir receives undesired components that have passed through a separation conduit.

24. A device as claimed in any preceding claim, wherein fluid is moved from a first substrate to a second substrate by providing a pressure differential at a connecting fluid-transporting feature that connects an inlet port on a second substrate to an outlet port on a first substrate.

25. A device as claimed in any preceding claim, wherein fluid is moved from a first substrate to a second substrate by providing a pressure differential at a connecting fluid-transporting feature that connects an inlet port on a second substrate to an outlet port on a first substrate.

26. A device as claimed in any preceding claim, wherein the device includes a sample inlet port in communication with the first separation fluid-transporting feature for introducing sample into the device.

27. A system including:
a device as cited in any preceding claim, and a detector in communication with one or more fluid-transporting features of the device for detecting sample components.

28. A method including:
introducing a sample into the sample inlet port of a system as claimed in claim 27;
separating sample components according to the first characteristic in the first separation fluid-transporting feature of the first substrate; and
providing sample components that have been separated according to the first characteristic to the second separation fluid-transporting feature of the second substrate for separation according to the second characteristic.
